# FASCICULE DE BREVET EUROPEEN

(11) **EP 2 356 003 B1**
(45) Date de publication et mention de la délivrance du brevet: **03.04.2013**
(21) Numéro de dépôt: 09795479.6
(22) Date de dépôt: 20.11.2009
(51) Int. Cl.: B60R 19/48, B60T 5/00

(54) **CONDUIT DE CIRCULATION D'AIR ET VEHICULE EQUIPE D'UN TEL CONDUIT.**
LUFTSTRÖMUNGSROHR UND EIN FAHRZEUG MIT EINEM SOLCHEN ROHR
AIR CIRCULATION DUCT, AND VEHICLE EQUIPPED WITH SUCH A DUCT

(30) Priorité: 08.12.2008 FR 0858327
(43) Date de publication de la demande: 17.08.2011
(73) Titulaire: Peugeot Citroën Automobiles SA, 78140 Vélizy Villacoublay (FR)
(72) Inventeur: BEAUDOIN, Olivier, F-25490 Dampierre Les Bois (FR)
(74) Mandataire: Fernandez, Francis Lionel
(86) Numéro de dépôt international: PCT/FR2009/052237
(87) Numéro de publication internationale: WO 2010/066973

(56) Documents cités:
- DE-A1-102005 044 062
- GB-A- 2 269 144
- US-A1- 2007 023 238

## Description

L'invention concerne un conduit de circulation d'air ainsi qu'un véhicule équipé d'un tel conduit

La présente invention concerne plus particulièrement un conduit de circulation d'air destiné au refroidissement d'un organe de freinage d'un véhicule, notamment de type automobile, comprenant un corps délimitant un flanc extérieur destiné à s'étendre au droit d'une peau de pare-choc, et un flanc intérieur destiné à s'étendre au droit d'un organe fonctionnel du véhicule.

Il est connu des pare-chocs de véhicule automobile comportant au moins un conduit destiné à la circulation de l'air de refroidissement d'un organe qui est du type d'un radiateur implanté dans un circuit de refroidissement ou d'un organe de freinage, tel qu'un ensemble composé d'un disque et de plaquettes de frein par exemple.

Le brevet EP0175655 décrit un tel pare-choc où chaque conduit est réalisé d'un seul tenant avec le reste du pare-choc selon un procédé de mise en forme par soufflage. L'un des conduits est prolongé d'une buse de sortie d'air, qui est orientée au droit d'un organe d'un dispositif de freinage et qui forme avec le reste du pare-choc une pièce monobloc. DE / 02005044062 A1 décrit un conduit de circulation d'air selon la préambule de la revendication 1.

Un tel pare-choc est par conséquent adapté à un seul type de véhicule pour lequel il a été développé de sorte qu'il est impossible d'utiliser les mêmes outils de fabrication pour la conception d'autres pare-chocs destinés à des véhicules de catégories différentes sans engager de substantielles et couteuses modifications. Une telle contrainte est préjudiciable en ce qui concerne le coût de développement d'un tel pare-choc ayant les mêmes prestations en termes de refroidissement d'un dispositif de freinage

La Demanderesse a en outre constaté que le conduit d'amenée d'air vers les organes de freinage subit des contraintes différentes et moindres à celles de la partie frontale du pare-choc de sorte que des réductions substantielles de coût pourraient être réalisées en recourant à des matériaux de rigidité différentes entre celui utilisé à la fabrication du conduit et celui utilisé à la fabrication de la partie frontale du pare-choc.

La Demanderesse a relevé néanmoins qu'une telle dissociation d'entre le conduit de circulation d'air et le pare-choc provoque un affaiblissement de la tenue en latéral du pare-choc, mais aussi l'apparition de bruits d'assemblage issus de la proximité du conduit et du pare-choc.

La demanderesse a aussi relevé combien il lui est rendue difficile l'ajout de moyens particuliers de fixation, notamment pour des connecteurs par exemple, dans une zone avant du véhicule qui est fortement occupée par d'autres organes fonctionnels.

Un but de la présente invention est de pallier tout ou partie des inconvénients de l'art antérieur relevés ci-dessus.

A cette fin, le conduit selon l'invention, par ailleurs conforme à la définition générique qu'en donne le préambule ci-dessus, est essentiellement caractérisé en ce que qu'il comprend un moyen de rigidification d'un pare-choc disposé sur au moins l'un d'entre ses flancs.

Par ailleurs, l'invention peut comporter l'une ou plusieurs des caractéristiques suivantes :
- Le conduit comprend un moyen de maintien d'au moins un connecteur disposé sur l'autre d'entre ses flancs,
- ledit moyen de rigidification et/ou ledit moyen de maintien est obtenu par moulage d'au moins une nervure réalisée à partir d'une matière plastique,
- le flanc extérieur comprend au moins une nervure de section fermée et de type polygonale, apte à venir en appui contre la peau de pare-choc afin d'en augmenter localement la rigidité,
- la nervure a un pourtour de profondeur variable afin de compenser un écart dimensionnel issu d'une différence de galbe entre la peau de pare-choc et le flanc extérieur du conduit,
- le flanc intérieur comprend un moyen de maintien d'un connecteur en l'état de non connexion de ce dernier à un équipement optionnel du véhicule,
- ledit moyen de maintien comprend une nervure formant un manchon qui est de section fermée et de forme sensiblement complémentaire à celle d'un connecteur,
- chaque nervure du flanc extérieur a un pourtour de longueur supérieure à celle du pourtour de la nervure dudit flanc intérieur,
- le conduit comprend au moins une patte faisant verticalement saillie hors du corps, ladite patte comprenant au moins un trou destiné à la fixation d'un connecteur en l'état de branchement de ce dernier à un équipement optionnel du véhicule.

L'invention a aussi trait à un véhicule comprenant un pare-choc, un pare-boue et une aile latérale délimitant un passage de roue, caractérisé en ce qu'il comprend au moins un conduit de circulation d'air comportant tout ou partie des caractéristiques susmentionnées.

Par ailleurs, le véhicule de l'invention peut comporter l'une ou plusieurs des caractéristiques suivantes :
- le conduit comprend une extrémité arrière montée solidaire du pare-boue au moyen d'au moins un clip de fixation,
- le conduit comprend une extrémité avant montée solidaire d'une grille d'entrée d'air au moyen d'au moins une encoche du conduit au travers de laquelle un ergot de la grille est apte à s'étendre,
- le pare-boue comprend une encoche au travers de laquelle s'étend l'extrémité arrière du conduit de sorte que l'extrémité arrière de celui-ci affleure le galbe intérieur du pare-boue.

D'autres avantages et particularités de l'invention ressortent de la description de modes de réalisation faite ci-après en référence aux dessins annexés dans lesquels :
- la figure 1 est un vue en perspective partielle d'un véhicule de type véhicule automobile, vu de trois quart avant, dans lequel est intégré un conduit de circulation d'air selon l'invention,
- la figure 2 est une vue en perspective des éléments délimitant un passage de roue du véhicule de la figure 1,
- la figure 3 est une vue en perspective représentant l'agencement du conduit de circulation d'air sur le pare-choc du véhicule,
- les figures 4 et 5 est une vue en perspective du conduit de circulation d'air pris isolément, montrant respectivement un côté destiné à coopérer avec le pare-choc et un côté opposé orienté vers l'intérieur du véhicule,
- la figure 6 est un agrandissement du pare-choc du véhicule de la figure 1, mettant en évidence un passage d'entrée d'air.

Dans ce qui suit, les termes « avant », « arrière », « droit » et « gauche » s'entendent selon un déplacement normal du véhicule, tandis que le terme « intérieur » ou « extérieur » associé à une pièce s'entend d'une orientation de celle-ci par rapport à un axe médian s'étendant longitudinalement au véhicule.

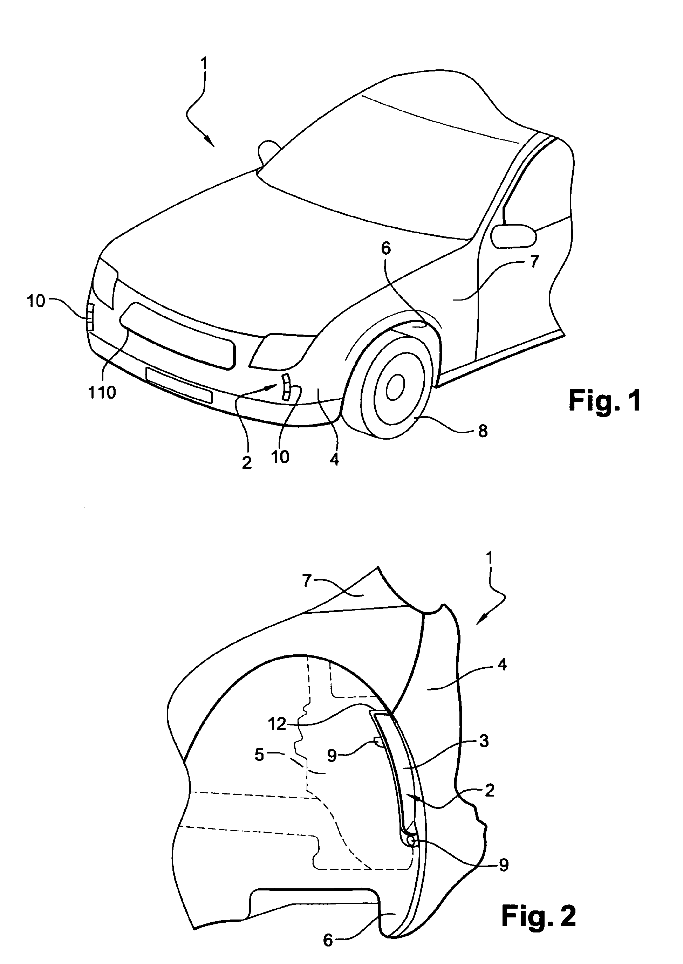

En se reportant à la figure 1, la partie avant du véhicule qui prend la référence générale 1, comprend un pare-choc 4 qui relie les ailes avant gauche et droite 7 du véhicule.

Une partie arrière du pare-choc 4 est disposé au regard d'une roue 8, tout comme une partie inférieure de l'aile 7 dont le galbe est sensiblement parallèle à la roue 8. Le pare-choc 4 et chaque aile avant 7 délimite une partie extérieure d'un passage de roue 8, tandis que la partie intérieure de celui-ci est délimité par un pare-boue 6 monté notamment sur le pare-choc 4 et l'aile 7.

La roue 8 est reliée à un dispositif de freinage connu, non représenté, qu'un conduit 2 de circulation d'air améliore le refroidissement. Pour ce faire, le pare-choc 4 comprend de part et d'autre d'une ouverture 110 centrale, au travers de laquelle l'air est destiné à refroidir un fluide d'un circuit hydraulique, tel qu'un circuit de climatisation ou de refroidissement du moteur, des ouvertures 10 situées symétriquement par rapport à l'axe médian du véhicule 1 et respectivement en amont d'un conduit de circulation d'air 2, formant de la sorte une entrée d'air.

Durant la mise en fonctionnement du véhicule, le conduit 2 est apte à guider l'air rencontrant le pare-choc 4 avant du véhicule 1 vers le dispositif de freinage de la roue 8 qui est en partie situé, par rapport à un axe transversal au véhicule, entre la roue 8 et le pare-boue 6.

En se reportant à la figure 2, une sortie du conduit 2 de circulation d'air est rendu visible grâce à l'ouverture délimitée d'un côté par une encoche 12 réalisée sur le bord périphérique extérieur du pare-boue et d'un autre côté par un rebord du pare-choc 4. L'ouverture ainsi obtenue est destinée à coopérer avec une partie arrière 2R du conduit 2. Celui-ci est en outre relié au pare-boue 6 au moyen de clips de fixation 9 de type connu, ce qui permet un démontage rapide du pare-boue lors d'une intervention de maintenance du véhicule.

La sortie arrière du conduit 2 est affleurante par rapport du pare-boue 6 et présente par conséquent un profil incurvé, sensiblement concave par rapport à la roue 8, qui suit avantageusement le galbe du pare-boue 6.

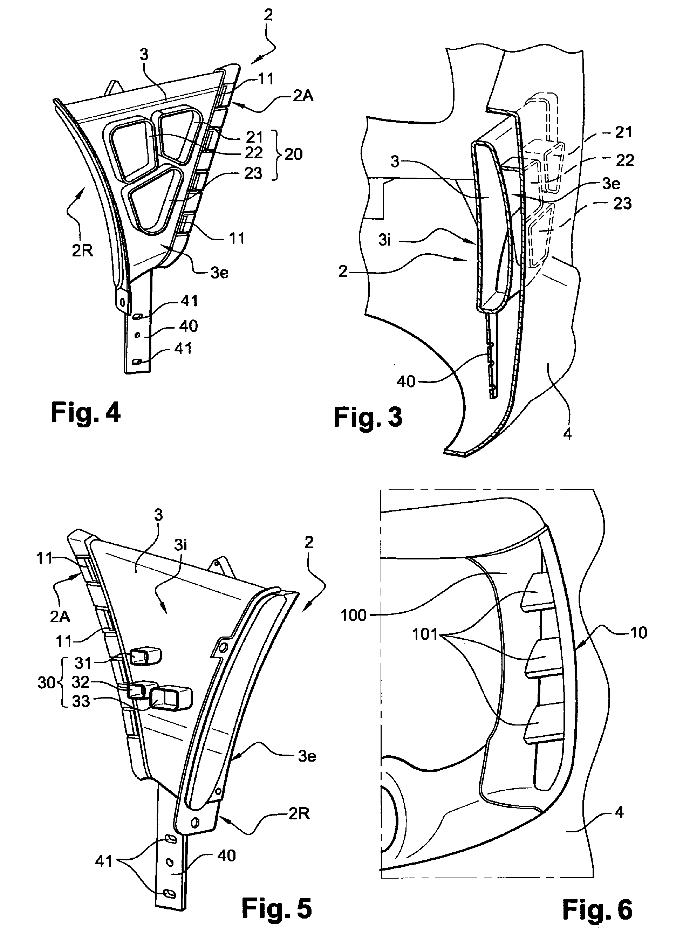

En se reportant à la figure 3, le pare-choc 4 est représenté en transparence, afin de rendre visible chaque nervure 20 en saillie hors de l'un des flancs latéraux 3i et 3e du conduit 2.

Le conduit 2 de l'invention est utilisé afin de rigidifier le pare-choc 4. Pour ce faire, le conduit 2 qui comprend un corps principal 3 délimitant un flanc intérieur 3i et un flanc extérieur 3e. Compte tenu l'agencement du conduit 2 entre le pare-choc 4 et un organe fonctionnel 5 du type d'un bol de réservoir de liquide de lave-glace par exemple, le flanc intérieur 5 est disposé horizontalement au droit de ce dernier.

Le flanc extérieur 3e du conduit 2 présentant un galbe différent de celui du pare-choc au droit duquel il s'étend horizontalement, le conduit 2 comprend un moyen 20 de compensation des défauts de galbes.

Le flanc extérieur 3e comprend à cet effet des nervures 21, 22, 23 de liaison du conduit au pare-choc. Cela permet d'utiliser un conduit 2 qui est standard pour une application sur des catégories distinctes de véhicule qui ont par conséquent des pare-chocs spécifiques.

Comme on peut l'apercevoir avec plus de discernement à la figure 4, le flanc extérieur 3e comprend une nervure 21 de liaison qui est en saillie vers l'extérieur.

De préférence, la surface du flanc extérieur 3e nécessite plusieurs nervures de liaison 21, 22 et 23 réparties uniformément afin d'augmenter les lignes de liaison entre le conduit et le pare-choc, ce qui équivaut à augmenter la surface d'appui du conduit 2 sur le pare-choc 4.

Tel que cela est représenté à titre d'exemple sur la figure 4, le conduit 2 comprend trois nervures 21, 22 et 23 de liaison.

Dans un mode préféré de réalisation, chaque moyen 20 de rigidification du conduit 2 au pare-choc 4 est fabriquée selon un procédé de surmoulage d'une matière plastique. Toutefois, chaque moyen 20 de liaison peut aussi venir de matière durant la fabrication par moulage du conduit 2.

Chaque nervure formant ledit moyen 20 de rigidification est, selon une coupe transversale, de section rectangulaire. Suivant son pourtour, chaque nervure 21, 22 ou 23 a une profondeur variable par rapport à un axe normal au flanc extérieur 3e du conduit 2, mais préalablement déterminée afin d'assurer la compensation recherchée pour combler la différence de galbe entre le conduit 2 et le pare-choc 4.

De préférence encore, chaque nervure est, selon un plan sensiblement longitudinal et parallèle à un axe vertical du véhicule, de section fermée et de forme polygonale. Ceci assure avantageusement une répartition au plus juste de l'ensemble des nervures 21, 22, sur le conduit 2, formant alors un maillage de type en nid d'abeille.

Lorsque le conduit 2 est monté sur la véhicule, chaque extrémité libre des nervures 21, 22 et 23 vient en appui contre le pare-choc 4.

Selon une variante de réalisation du conduit 2, chaque bord libre d'une nervure 21, 22 ou 23 est composé d'un matériau plastique déformable, tel qu'un élastomère, qui nécessite un montage sous contrainte de chaque nervure contre le pare-choc afin de s'affranchir de tout jeu de montage entre ces pièces, ce qui éloigne d'autant le risque de bruit parasite lors du fonctionnement du véhicule. Une telle couche déformable de la nervure vient par exemple d'un autre surmoulage.

La figure 4 met en exergue la présence d'une partie avant 2A du corps 3 qui est sensiblement plane et inclinée vers la base du corps 3 où se rejoignent les flancs intérieur 3i et extérieur 3e. Le flanc extérieur 3e, ainsi que le flanc intérieur 3i qui sera détaillé par la suite, comprennent plusieurs passages 11 qui définissent ce que l'on nomme par la suite, une ligne discontinue d'ouvertures de fixation qui est apte à recevoir des éléments de fixation associé, du type d'ergots de fixation, d'un collecteur 100 d'entrée d'air, représenté à la figure 6. Chaque passage 11 du conduit est destiné à recevoir un élément d'encliquetage non représenté afin d'assurer un montage rapide du conduit 2 sur le collecteur 100.

Selon un premier mode de réalisation du collecteur 100 d'entrée d'air situé en amont du conduit 2, il est venu directement de matière du pare-choc 4, selon un procédé de moulage.

Selon une variante de réalisation, un tel collecteur 100 est une pièce distincte du pare-choc 4, qui est emmanchée en force sur celui-ci, et qui s'étend au travers de l'ouverture 10 associée.

Le collecteur 100 d'entrée d'air comprend en outre un moyen 101 de guidage du flux d'air à l'intérieur du conduit 2 ce qui permet une meilleure orientation de ce dernier vers l'organe du dispositif de freinage à refroidir. A cet effet, plusieurs ailettes fixes, ici au nombre de trois, sont disposées dans le collecteur selon une inclinaison prédéterminée par calcul afin d'optimiser l'écoulement d'air.

En se reportant à la figure 5, le corps 3 du conduit 2 comprend un moyen de maintien 30 faisant transversalement saillie hors du flanc intérieur 3i. Ledit moyen 30 de maintien est destiné à recevoir au moins un connecteur d'un circuit d'alimentation électrique par exemple, d'un équipement optionnel du véhicule. Pour ce faire, ledit moyen 30 de maintien comprend au moins une nervure formant un manchon 31, 32 et 33 d'emboîtement d'un connecteur associé, non représenté.

Chaque manchon 31, 32, ou 33 est, selon un plan sensiblement longitudinal et parallèle à un axe vertical du véhicule, de section fermée et de forme polygonale. Chaque nervure, formant un des manchons 31, 32 et 33, est selon une coupe transversale, de section rectangulaire et de profondeur constante sur tout son pourtour, par rapport à un axe normal au flanc intérieur 3i du conduit 2.

A l'identique du procédé de fabrication des nervures de rigidification 21, 22 et 23, chaque manchon 31, 32 ou 33 est réalisé à partir d'une matière plastique.

En se reportant aux figures 3 à 5, le conduit 2 comprend en outre un élément supplémentaire qui prend la référence générale 40 et que l'on qualifie dans ce qui suit de patte 40 de fixation d'un connecteur en l'état de branchement de ce dernier à un équipement optionnel du véhicule présent sur celui-ci. Une telle patte 40 est disposée en saillie verticale hors du corps 3 du conduit 2, depuis une zone inférieure du corps 3 qui délimite la jonction entre les flancs intérieur 3i et extérieur 3e.

De préférence une telle patte 40 comprend des trous 41 de passage d'un clip de fixation qui est rendu solidaire du connecteur, par exemple au moyen du câble relié électriquement à ce dernier. Lorsque l'un des connecteurs est désolidarisé du conduit 2 afin d'être relié à un équipement du véhicule, tel qu'un projecteur antibrouillard par exemple, un opérateur retire le connecteur du manchon 31, 32 ou 33 dans lequel il est emmanché. L'opérateur relie par la suite le connecteur à l'équipement optionnel afin de créer la liaison électrique entre le circuit d'alimentation électrique et l'équipement, puis attache la faisceau électrique dans l'un des trous 41 libres du conduit 2 de circulation d'air.

Le conduit de l'invention et le véhicule équipé d'un tel conduit sont remarquables en ce qu'ils permettent une prestation refroidissement d'un organe d'un dispositif de freinage qui améliore la qualité du véhicule par une meilleure tenue du pare-choc, tout en restant peu couteux à mettre en oeuvre.

Ils permettent par la même occasion de traiter le problème lié à la fixation de connecteurs dans une zone d'encombrement élevé.

## Revendications

1. Conduit (2) de circulation d'air destiné au refroidissement d'un organe de freinage d'un véhicule (1), notamment de type automobile, comprenant un corps (3) délimitant un flanc (3e) extérieur destiné à s'étendre au droit d'une peau (4) de pare-choc, et un flanc intérieur (3i) destiné à s'étendre au droit d'un organe fonctionnel (5) du véhicule, **caractérisé en ce que** ledit flanc extérieur 3e comprend des nervures (21, 22, 23) dont les extrémités libres viennent en appui contre le pare-choc 4 lorsque le conduit est monté sur le véhicule afin de former un moyen (20) de rigidification dudit pare-choc (4).

2. Conduit selon la revendication 1, **caractérisé en ce qu'**il comprend un moyen (30) de maintien d'au moins un connecteur disposé sur l'autre d'entre ses flancs (3e, 3i).

3. Conduit selon la revendication 1 ou 2, **caractérisé en ce que** ledit moyen (20) de rigidification et/ou ledit moyen (30) de maintien est obtenu par moulage d'au moins une nervure réalisée à partir d'une matière plastique.

4. Conduit selon l'une quelconque des revendications 1 à 3, **caractérisé en ce que** le flanc (3e) extérieur comprend au moins une nervure (21, 22, 23) de section fermée et de type polygonale, apte à venir en appui contre la peau (4) de pare-choc afin d'en augmenter localement la rigidité.

5. Conduit selon la revendication 4, **caractérisé en ce que** la nervure (21, 22, 23) a un pourtour de profondeur variable afin de compenser un écart dimensionnel issu d'une différence de galbe entre la peau (4) de pare-choc et le flanc (3e) extérieur du conduit (2).

6. Conduit selon l'une quelconque des revendications 1 à 5, **caractérisé en ce que** le flanc (3i) intérieur comprend un moyen de maintien (30) d'un connecteur en l'état de non connexion de ce dernier à un équipement optionnel du véhicule.

7. Conduit selon la revendication 4, **caractérisé en ce que** ledit moyen de maintien (30) comprend une nervure (31, 32, 33) formant un manchon qui est de section fermée et de forme sensiblement complémentaire à celle d'un connecteur.

8. Conduit selon l'ensemble des revendications 4 et 7, **caractérisé en ce que** chaque nervure (21, 22, 23) du flanc (3e) extérieur a un pourtour de longueur supérieure à celle du pourtour de la nervure (31, 32, 33) dudit flanc intérieur (3i).

9. Conduit selon l'une quelconque des revendications 1 à 8, **caractérisé en ce qu'**il comprend au moins une patte (40) faisant verticalement saillie hors du corps (3), ladite patte (40) comprenant au moins un trou (41) destiné à la fixation d'un connecteur en l'état de branchement de ce dernier à un équipement optionnel du véhicule.

10. Véhicule (1) comprenant un pare-choc (4), un pare-boue (6) et une aile latérale (7) délimitant un passage de roue (8), **caractérisé en ce qu'**il comprend au moins un conduit (2) de circulation d'air conforme à l'une quelconque des revendications précédente.

11. Véhicule (1) selon la revendication 10, **caractérisé en ce que** le conduit (2) comprend une extrémité arrière (2R) montée solidaire du pare-boue (6) au moyen d'au moins un clip (9) de fixation.

12. Véhicule selon la revendication 10 ou 11, **caractérisé en ce que** le conduit (2) comprend une extrémité avant (2A) montée solidaire d'une grille (100) d'entrée d'air au moyen d'au moins une encoche (11) du conduit au travers de laquelle un ergot de la grille est apte à s'étendre.

13. Véhicule selon l'une des revendications 10 à 12, **caractérisé en ce que** le pare-boue (6) comprend une encoche (12) au travers de laquelle s'étend l'extrémité arrière (2R) du conduit (2) de sorte que l'extrémité arrière (2R) de celui-ci affleure le galbe intérieur du pare-boue (6).

## Claims

1. An air circulation duct (2) intended for cooling a braking member of a vehicle (1), in particular of the automobile type, including a body (3) delimiting an outer flank (3e) intended to extend in line with a bumper skin (4), and an inner flank (3i) intended to extend in line with a functional member (5) of the vehicle, **characterized in that** the said outer flank 3e includes ribs (21, 22, 23), the free ends of which come to rest against the bumper 4 when the duct is mounted on the vehicle so as to form a stiffening means (20) of the said bumper (4).

2. The duct according to Claim 1, **characterized in that** it includes a holding means (30) of at least one connector arranged on the other of its flanks (3e, 3i).

3. The duct according to Claim 1 or 2, **characterized in that** the said stiffening means (20) and/or the said holding means (30) is obtained by moulding of at least one rib made from a plastic material.

4. The duct according to any one of Claims 1 to 3, **characterized in that** the outer flank (3e) includes at least one rib (21, 22, 23) of closed section and of polygonal type, able to come to rest against the bumper skin (4) so as to locally increase the rigidity thereof.

5. The duct according to Claim 4, **characterized in that** the rib (21, 22, 23) has a periphery of variable depth so as to compensate for a dimensional gap resulting from a difference in contour between the bumper skin (4) and the outer flank (3e) of the duct (2).

6. The duct according to any one of Claims 1 to 5, **characterized in that** the inner flank (3i) includes a holding means (30) of a connector in the state of nonconnection of the latter to an optional equipment of the vehicle.

7. The duct according to Claim 4, **characterized in that** the said holding means (30) includes a rib (31, 32, 33) forming a sleeve which is of closed section and of a shape substantially complementary to that of a connector.

8. The duct according to all of Claims 4 and 7, **characterized in that** each rib (21, 22, 23) of the outer flank (3e) has a periphery of greater length than that of the periphery of the rib (31, 32, 33) of the said inner flank (3i).

9. The duct according to any one of Claims 1 to 8, **characterized in that** it includes at least one lug (40) projecting vertically from the body (3), the said lug (40) including at least one hole (41) intended for the fixing of a connector in the connection state of the latter to an optional equipment of the vehicle.

10. A vehicle (1) including a bumper (4), a mud shield (6) and a lateral wing (7) delimiting a wheel arch (8), **characterized in that** it includes at least one air circulation duct (2) according to any one of the preceding claims.

11. The vehicle (1) according to Claim 10, **characterized in that** the duct (2) includes a rear end (2R) mounted integrally with the mud shield (6) by means of at least one fixing clip (9).

12. The vehicle according to Claim 10 or 11, **characterized in that** the duct (2) includes a front end (2A) mounted integrally with an air inlet grille (100) by means of at least one slot (11) of the duct through which a pin of the grid is able to extend.

13. The vehicle according to one of Claims 10 to 12, **characterized in that** the mud shield (6) includes a slot (12) through which the rear end (2R) of the duct (2) extends such that the rear end (2R) thereof is flush with the interior contour of the mud shield (6).

## Patentansprüche

1. Luftströmungsrohr (2), das zum Kühlen eines Bremselements eines Fahrzeugs (1) bestimmt ist, insbesondere eines Kraftfahrzeugs, das einen Körper (3) aufweist, der eine äußere Flanke (3e) abgrenzt, die dazu bestimmt ist, sich im rechten Winkel zu einem Stoßfängerblech (4) zu erstrecken, und eine innere Flanke (3i), die dazu bestimmt ist, sich im rechten Winkel zu einem Funktionselement (5) des Fahrzeugs zu erstrecken, **dadurch gekennzeichnet, dass** die externe Flanke (3e) Rippen (21, 22, 23) aufweist, deren freie Enden gegen den Stoßfänger (4) zum Aufliegen kommen, wenn das Rohr auf das Fahrzeug montiert ist, um ein Versteifungsmittel (20) des Stoßfängers (4) zu bilden.

2. Rohr nach Anspruch 1, **dadurch gekennzeichnet, dass** es ein Mittel (30) zum Halten wenigstens eines Steckverbinders aufweist, der auf dem anderen seiner Flanken (3e, 3i) angeordnet ist.

3. Rohr nach Anspruch 1 oder 2, **dadurch gekennzeichnet, dass** das Versteifungsmittel (20) und/oder das Haltemittel (30) durch Formen wenigstens einer Rippe, die ausgehend von einem Kunststoff hergestellt ist, erzielt wird.

4. Rohr nach einem der Ansprüche 1 bis 3, **dadurch gekennzeichnet, dass** die äußere Flanke (3e) wenigstens eine Rippe (21, 22, 23) mit geschlossenem Querschnitt des Vielecktyps aufweist, die geeignet ist, um gegen das Stoßfängerblech (4) zum Aufliegen zu kommen, um dessen Steifigkeit lokal zu erhöhen.

5. Rohr nach Anspruch 4, **dadurch gekennzeichnet, dass** die Rippe (21, 22, 23) einen Umfang mit variabler Tiefe hat, um einen maßlichen Unterschied auszugleichen, der aus einem Wölbungsunterschied zwischen dem Stoßfängerblech (4) und der äußeren Flanke (3e) des Rohrs hervorgeht.

6. Rohr nach einem der Ansprüche 1 bis 5, **dadurch gekennzeichnet, dass** die innere Flanke (3i) ein Haltemittel (30) eines Steckverbinders im nicht angeschlossenen Zustand dieses Letzteren an eine optionale Ausrüstung des Fahrzeugs aufweist.

7. Rohr nach Anspruch 4, **dadurch gekennzeichnet, dass** das Haltemittel (30) eine Rippe (31, 32, 33) aufweist, die einen Stutzen bildet, der einen geschlossenen Querschnitt und eine im Wesentlichen zu der eines Steckers komplementäre Form hat.

8. Rohr nach den Ansprüchen 4 und 7, **dadurch gekennzeichnet, dass** jede Rippe (21, 22, 23) der äußeren Flanke (3e) einen Umfang mit einer Länge hat, die größer ist als die des Umfangs der Rippe (31, 32, 33) der inneren Flanke (3i).

9. Rohr nach einem der Ansprüche 1 bis 8, **dadurch gekennzeichnet, dass** es wenigstens eine Pratze (40) aufweist, die vertikal aus dem Körper (3) herausragt, wobei die Pratze (40) wenigstens eine Öffnung (41) aufweist, die zum Befestigen eines Steckverbinders im angeschlossenen Zustand dieses Letzteren an eine optionale Ausrüstung des Fahrzeugs bestimmt ist.

10. Fahrzeug (1), das einen Stoßfänger (4), einen Kotflügel (6) und einen seitlichen Flügel (7), der einen Radlauf (8) abgrenzt, aufweist, **dadurch gekennzeichnet, dass** es wenigstens ein Luftströmungsrohr (2) in Übereinstimmung mit einem der vorhergehenden Ansprüche aufweist.

11. Fahrzeug (1) nach Anspruch 10, **dadurch gekennzeichnet, dass** das Rohr (2) ein hinteres Ende (2R) aufweist, das mittels wenigstens eines Befestigungsclips (9) fest mit dem Kotflügel (6) verbunden ist.

12. Fahrzeug nach Anspruch 10 oder 11, **dadurch gekennzeichnet, dass** das Rohr (2) ein vorderes Ende (2A) aufweist, das mit einem Lufteinlassgitter (100) mittels wenigstens einer Kerbe (11) des Rohrs, durch welche sich ein Dorn des Gitters erstrecken kann, fest verbunden ist.

13. Fahrzeug nach einem der Ansprüche 10 bis 12, **dadurch gekennzeichnet, dass** der Kotflügel (6) eine Kerbe (12) aufweist, durch welche sich das hintere Ende (2R) des Rohrs (2) derart erstreckt, dass das hintere Ende (2R) dieses mit der Innenwölbung des Kotflügels (6) bündig liegt.
